(19) Europäisches Patentamt
European Patent Office
Office européen des brevets

(11) Veröffentlichungsnummer: **0 061 115**
**B1**

(12) # EUROPÄISCHE PATENTSCHRIFT

(45) Veröffentlichungstag der Patentschrift: **30.05.84**

(51) Int. Cl.³: **C 07 F 9/38** // C07F9/40

(21) Anmeldenummer: **82102084.9**

(22) Anmeldetag: **15.03.82**

(54) **Verfahren zur Herstellung von Vinylphosphonsäure.**

(30) Priorität: **20.03.81 DE 3110975**

(43) Veröffentlichungstag der Anmeldung: **29.09.82 Patentblatt 82/39**

(45) Bekanntmachung des Hinweises auf die Patenterteilung: **30.05.84 Patentblatt 84/22**

(84) Benannte Vertragsstaaten: **BE CH DE FR GB IT LI NL**

(56) Entgegenhaltungen:
**EP - A - 0 032 663**
**FR - A - 2 283 145**

**CHEMICAL ABSTRACTS, Band 78, Nr. 5, 5. Februar 1973, Seite 517, Nr. 29900q, Columbus, Ohio, USA, M. YAMAGAMI et al.: "Gamma-induced addition of dialkyl phosphites to olefins and pyrolysis of the 1:1 adducts"**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr., Altkönigstrasse 11a, D-6242 Kronberg/Taunus (DE)**

**EP 0 061 115 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Reine Vinylphosphonsäure kann bekanntlich aus Vinylphosphonsäuredichlorid gewonnen werden. Die Synthese von reinem Vinylphosphonsäuredichlorid ist aber technisch aufwendig. Erwünscht ist nun ein einfaches Verfahren, das rohe Vinylphosphonsäure in technischer Qualität liefert.

Es wurde nun überraschenderweise gefunden, dass man auf einfache und wirtschaftliche Weise Vinylphosphonsäure herstellen kann, indem man 2-Acetoxyethanphosphonsäuredialkylester der allgemeinen Formel

$$CH_3COOCH_2CH_2\overset{O}{\overset{\|}{P}}(OR)_2,$$

worin R eine Alkylgruppe mit 1 bis 4, bevorzugt 1 bis 2 Kohlenstoffatomen bedeutet, in Gegenwart saurer oder basischer Katalysatoren auf 150–270°C, vorzugsweise 170–230°C, erhitzt, wobei Alkylacetate der allgemeinen Formel

$$CH_3COOR,$$

mit der obengenannten Bedeutung von R abgespalten werden, und das verbleibende Reaktionsgemisch anschliessend mit Wasser bei Temperaturen zwischen 130 und 230°C, vorzugsweise 140–175°C unter gleichzeitiger Abdestillation des gebildeten Alkohols der allgemeinen Formel ROH mit der obengenannten Bedeutung von R, hydrolysiert.

Es ist überraschend, dass das bei der Abspaltung von Alkylacetat erhaltene Gemisch verschiedenartiger Vinylphosphonsäurederivate bei der Hydrolyse im angegebenen Temperaturbereich im wesentlichen Vinylphosphonsäure liefert.

Als Ausgangsmaterialien kommen z.B. in Frage 2-Acetoxyethanphosphonsäuredimethyl-, diethyl-, diisopropyl- und di-n-butylester. Besonders bevorzugt ist der 2-Acetoxyethanphosphonsäuredimethylester.

Als saure oder basische Katalysatoren kommen zahlreiche Verbindungen in Frage. Als saure Katalysatoren lassen sich verwenden:

A) Schwefelsäure oder Phosphorsäure.
B) Halogenhaltige Carbonsäuren mit einem $P_{Ka}$-Wert < 2,5, wie Dichloressigsäure, Trichloressigsäure, Trifluoressigsäure.
C) Aromatische Sulfonsäuren mit einem $P_{Ka}$-Wert < 2,5, wie Benzolsulfonsäure, p-Toluolsulfonsäure.
D) Bevorzugt Phosphinsäuren mit 2 bis 18 Kohlenstoffatomen wie Dimethylphosphinsäure, Methylethylphosphinsäure, Dioktylphosphinsäure, Methylphenylphosphinsäure, Diphenylphosphinsäure.
E) Besonders bevorzugt Phosphonsäuren mit 1 bis 18 Kohlenstoffatomen und deren Halbester mit 1 bis 4 Kohlenstoffatomen im Alkoholrest wie Methanphosphonsäure, Propanphosphonsäure, Propanphosphonsäuremonomethylester, Oktadekanphosphonsäure, 2-Acetoxyethanphosphonsäure, 2-Acetoxyethanphosphonsäuremonomethylester, Vinylphosphonsäure, Vinylphosphonsäuremonomethylester, Vinylphosphonsäuremonoethylester, Benzolphosphonsäure.

F) Ebenfalls besonders bevorzugt Pyrophosphonsäuren oder deren Halbester wie Methanpyrophosphonsäure, Benzolpyrophosphonsäure, Vinylpyrophosphonsäure, Vinylpyrophosphonsäuremonomethylester.

G) Sehr geeignet sind auch die sauren Reaktionsgemische, die bei dem erfindungsgemässen Verfahren entstehen.

Als basische Katalysatoren lassen sich verwenden:

A) Tertiäre aliphatische und aromatische Amine und Phosphine mit 3 bis 18 Kohlenstoffatomen wie Trimethylamin, Tripropylamin, Tributylamin, Triphenylamin, Trimethylphosphin, Triethylphosphin, Tripropylphosphin, Tributylphosphin, Triphenylphosphin und Tris-(p-dimethylaminophenyl)-phosphin und die entsprechenden gemischten Amine, Phosphine, Phospholane und Phospholene wie Dimethylethylamin, Diethylbutylamin, N-Dimethylanilin, 4-Methyl-N-dimethylanilin, N-Diethylanilin. N,N-Tetramethylphenyldiamin oder N-Methylpyrrolidin; Methyldiethylphosphin, Dimethylpropylphosphin, Diethylbenzylphosphin, 1-Methylphospholen-3 und 1-Ethyl-3-methylphospholen-3.
B) Quartäre Ammoniumsalze bzw. Phosphoniumsalze mit 3 bis 18 Kohlenstoffatomen wie Tetramethylammoniumchlorid oder -bromid, Tetraethylphosphoniumchlorid, Trimethylbenzylammoniumchlorid, Triethylbenzylammoniumchlorid,Triethylbenzylammoniumbromid, Trimethylbenzylphosphoniumchlorid, Triphenylethylphosphonium-2,4-diaminobenzosulfonat;
C) Heterocyclische Verbindungen mit aromatischem Charakter wie Pyridin, Chinolin, ihre verschiedenen Alkyl- und Dialkyl-, vorzugsweise Methyl- bzw. Dimethyl-derivate, Imidazol, N-Vinyl-imidazol, Benzthiazol, 2-Amino-6-ethoxy-benzthiazol, ferner Phosphabenzole;
D) Säureamide wie Dimethylformamid, Dimethylformamid, N-Dimethylacetamid, N-Diethylpropionamid, N-Dimethylbenzamid, N-Methyl-pyrrolidon, N,N'-Tetramethylterephthalsäurediamid oder Harnstoffe wie Tetramethylharnstoff und Trimethylphenylharnstoff;
E) Sonstige Stickstoff- oder Phosphorverbindungen mit einer höheren Wertigkeit eines N- oder P-Atoms als 3 wie Pyridin-N-oxid, Trimethylphosphinoxid, Tributylphosphinoxid, Trihexylphosphinoxid, Triphenylphosphinoxid, Trihexylphosphinoxid, Triphenylphosphinoxid, Dimethylphenylphosphinoxid, Dimethylphenylphosphinoxid, Dimethylphenylphosphinsulfid, Dimethylchlormethylphosphinoxid, Dimethyleikosylphosphinoxid, Dimethyldodecylphosphinoxid, Di-

methylphosphinoxid, Dimethylpyrrolidinyl-1-methylphosphinoxid, Triphenylphosphindichlorid, Dimethyldodecylphosphinsulfid, Triphenylphosphinimin, Dimethylchlormethylphosphindichlorid, N-2-Dimethylphosphinylethylmethyl-acetamid, N-2-Dimethylphosphinylethylmethyl-amin, Phospholenoxid wie 1-Methylphospholen-1-oxid und 1-Ethyl-3-methyl-phospholen-1-oxid; F) Amide der phosphinigen und phosphonigen Säure und der Phosphin- und Phosphonsäuren sowie ihrer Thioanaloga, wie Ethanphosphonsäure-bis-diethylamid, Methanbutanphosphinigsäure- dimethylamid, Diethylphosphinisäureisobutylamid. Ferner Triamide der Phosphor- und der Thiophosphorsäure wie Hexamethylphosphorsäuretriamid.

Die Katalysatoren werden in Mengen von 0,01 bis 10, bevorzugt 0,1 bis 5 Gew.-% eingesetzt. Bei Verwendung von Vinylphosphonsäure, deren Monoalkylestern oder der bereits gewonnenen sauren Reaktionsgemische können auch grössere Mengen von 10 bis 50 Gew.-% eingesetzt werden.

Das Verfahren wird im allgemeinen so durchgeführt, dass das Ausgangsprodukt mit dem Katalysator gemischt wird und auf die erforderliche Reaktionstemperatur von 150 bis 270°C, vorzugsweise 170 bis 230°C gebracht wird.

Höhere Temperaturen sind möglich, bringen aber keinen Vorteil. Es besteht dann die Gefahr der verstärkten Bildung von Nebenprodukten, aber auch der Polymerisation. Das sich abgespaltende Alkylacetat destilliert dann zusammen mit geringen Mengen Alkanol und Dialkylether ab. Die Destillation erfolgt unter Normaldruck, gegebenenfalls unter Zuhilfenahme eines Intertgases, wie z.B. Stickstoff. Es kann jedoch im Einzelfall vorteilhaft sein, im Vakuum abzudestillieren. Die Abspaltung des Alkylacetats ist nach 2 bis etwa 35 Stunden beendet. Es kann zweckmässig sein, danach noch 1 bis 4 Stunden bei der Reaktionstemperatur, aber auch höheren Temperaturen nachzuführen. Das Verfahren kann auch kontinuierlich gestaltet werden.

Es kann vorteilhaft sein, Polymerisationsinhibitoren, wie z.B. Hydrochinon, Hydrochinonmonomethylether oder Phenothiazin, zuzusetzen.

Geht man von 2-Acetoxyethanphosphonsäurediestern aus, die von ihrer Herstellung her mit geringen Mengen des entsprechenden Monoesters verunreinigt sind, ist ein weiterer Zusatz eines Katalysators nicht unbedingt notwendig. Es ist dabei zweckmässig, die Reaktion bei etwa 250°C zu beginnen. Wenn sich dann das saure Reaktionsprodukt, das ja ebenfalls als Katalysator für die Abspaltung wirkt, in genügendem Ausmass gebildet hat, kann man das Verfahren bei tieferen Temperaturen, beispielsweise bei 180 bis 220°C, weiterführen.

Das bei dieser Abspaltungsreaktion entstandene Reaktionsgemisch enthält im wesentlichen Vinylphosphonsäurederivate, Vinylpyrophosphonsäurederivate, oligomere Pyrophosphonsäurederivate und Derivate der 2-Hydroxyethanphosphonsäure zusammen mit Phosphorsäurederivaten. Das Reaktionsgemisch wird so, wie es anfällt, anschliessend bei der erforderlichen Reaktionstemperatur mit Wasser umgesetzt, wobei der entstehende Alkohol zweckmässig über eine Kolonne abdestilliert wird. Es können sich dabei geringe Mengen Dialkylether und Olefine bilden. Die Umsetzung mit Wasser ist beendet, wenn kein Alkohol mehr abgespalten wird. Dabei kann es vorteilhaft sein, gegen Ende der Umsetzung grössere Mengen Wasser einzusetzen und einen Teil des nicht umgesetzen Wassers mit dem Alkohol abzudestillieren. Der verfahrensgemäss zu wählende Druck ist nicht kritisch, jedoch wird das Verfahren bevorzugt bei etwa Atmosphärendruck durchgeführt.

Die Reaktionstemperaturen bei diesem Verfahrensschritt liegen bei 130–230°C. Auch oberhalb 230°C kann die Reaktion durchgeführt werden, jedoch ist dann im zunehmendem Masse eine Zersetzung der Vinylphosphonsäure zu erwarten. Bevorzugt wird im Temperaturbereich 140 bis 175°C gearbeitet. Die Wasserumsetzung kann auch kontinuierlich durchgeführt werden. Die anfallende Vinylphosphonsäure enthält neben 2-Hydroxyethanphosphonsäure bzw. Derivaten der 2-Hydroxyethanphosphonsäure insbesondere noch Phosphonsäure. Sie ist geeignet als Korosionsschutzmittel in wässrigen Systemen. Insbesondere ist sie geeignet als Zwischenprodukt zur Herstellung von Mitteln zur Flammhemmung. Beispielsweise erhält man interessante Mittel zur Flammhemmung, wenn man diese Vinylphosphonsäure mit Vinyl- und/oder Propan-phosphonsäuredichlorid umsetzt und das dabei anfallende Reaktionsgut mit Äthylenoxid weiterreagieren lässt. Es ist auch möglich, die Vinylphosphonsäure über ihre Salze von den Nebenprodukten, insbesondere von der Phosphorsäure zu trennen.

Beispiel 1

100 g 2-Acetoxyethanphosphonsäuredimethylester werden unter Rühren auf 220–230°C während 2 Stunden erhitzt, während ein Gemisch von 200 g 2-Acetoxyethanphosphonsäuredimethylester und 3 g 4-(Diemthylamino)pyridin zugetropft wird. Gleichzeitig destilliert Methylacetat ab. Weitere 3,5 Stunden wird der Reaktionsansatz bei 210°C gehalten, schliesslich noch 30 Minuten bei 200–210°C, während weiterhin Methylacetat abdestilliert. Insgesamt destillieren 112 g Methylacetat ab, in einer der Apparatur nachgeschalteten Kühlfalle sammeln sich 5 g Dimethyläther. Zum entstandenen Gemisch von Vinylphosphonsäurederivaten wird bei 160°C unter Rühren Wasser zudosiert während 4 Stunden, während über eine Silbermantelkolonne Methanol abdestilliert. Nach Beendigung der Methanolabspaltung wird auf 90°C gekühlt und bei dieser Temperatur bei 0,5 Torr (0,67 mbar) im Reaktionsansatz noch gelöstes Wasser abdestilliert. Man erhält schliesslich 164 g eines Reaktionsproduktes, das 77% Vinylphosphonsäure, 5,1% Vinylphosphonsäureester der 2-Hydroxyethanphosphonsäure der Struktur

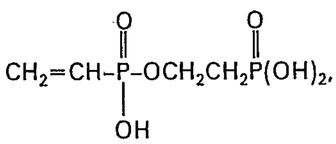

4,1% 2-Hydroxyethanphosphonsäure und 8% Phosphorsäure enthält, bezogen auf die Gesamtmenge der Phosphorsignale im ³¹P-NMR-Spektrum.

Beispiel 2

100 g 2-Acetoxyethanphosphonsäuredimethylester werden unter Rühren auf 230°C während 2 Stunden erhitzt, während ein Gemisch von 200 g 2-Acetoxyethanphosphonsäuredimethylester und 30 g Vinylphosphonsäure zugetropft wird. Gleichzeitig destilliert Methylacetat ab. 1 Stunde wird bei 200°C nachgerührt. Zu dem entstandenen Gemisch von Vinylphosphonsäurederivaten wird bei 160°C unter Rühren Wasser zudosiert innerhalb von 2,5 Stunden, während über eine Silbermantelkolonne Methanol abdestilliert. Man erhält 202 g eines Reaktionsproduktes, das ca. 4% Wasser enthält. Das Reaktionsprodukt enthält weiterhin 76% Vinylphosphonsäure, 5% Vinylphosphonsäureester der 2-Hydroxyethanphosphonsäure der Struktur

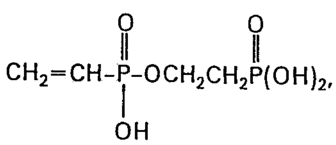

3,2% 2-Hydroxyethanphosphonsäure und 9% Phosphorsäure bezogen auf die Gesamtmenge der Phosphorsignale im ³¹P-NMR-Spektrum.

Beispiel 3

80 g 2-Acetoxyethanphosphonsäurediethylester und 30 g Vinylphosphonsäure werden gemischt und unter Rühren auf 180°C erhitzt. Nun werden zuerst während 5 Stunden bei 175–180°C, dann während 19 Stunden bei 185–190°C 400 g 2-Acetoxyethanphosphonsäurediethylester langsam zugetropft. Anschliessend wird 1 Stunde bei 200°C gehalten. Während der gesamten Reaktionsdauer destilliert Ethylacetat ab, insgesamt 190 g. In einer der Apparatur nachgeschalteten Kühlfalle sammeln sich 2 g. Man erhält 192 g Vinylphosphonsäurederivatgemisch. 149 g dieses Gemisches werden auf 160°C unter Rühren erhitzt und während 5 Stunden langsam Wasser eingetropft, während Ethanol über eine Silbermantelkolonne abdestilliert. Man erhält 143 g eines Reaktionsproduktes, das 72% Vinylphosphonsäure, 7,3% Vinylphosphonsäureester der 2-Hydroxyethanphosphonsäure der Struktur

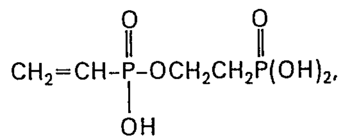

5,5% 2-Hydroxyethanphosphonsäure und 7,3% Phosphorsäure, bezogen auf die Gesamtmenge der Phosphorsignale im ³¹P-NMR-Spektrum, enthält.

Beispiel 4

200 g 2-Acetoxyethanphosphonsäuredimethylester und 10 g Triphenylphosphin werden unter Rühren auf 210 bis 225°C erhitzt. Im Verlaufe von 3,5 Stunden destillieren 71 g Methylacetat (94% d.Th.) ab. Eine Stunde wird nachgerührt bei Reaktionstemperatur. Es verbleiben 124 g eines Reaktionsproduktes, das entsprechend Beispiel 1 bei 170°C mit Wasser umgesetzt wurde. Man erhält 112 g rohe Vinylphosphonsäure.

Beispiel 5

300 g 2-Acetoxyethanphosphonsäuredimethylester, die herstellungsgemäss 1 g 2-Acetoxyethanphosphonsäuremonomethylester enthalten, werden 1 Stunde unter Rühren auf 246°C erhitzt, dann 3 Stunden auf 220 bis 230°C. Es destillieren über eine Kolonne 108 g Methylacetat ab, die 2,4% Methanol und 2,5% Dimethylether enthalten. In einer der Apparatur nachgeschalteten Kühlfalle sammeln sich 6,5 g Methylacetat und 3 g Dimethylether. Nun wird 1 Stunde bei 210 bis 230°C nachgerührt. In einer der Apparatur nachgeschalteten Kühlfalle sammeln sich erneut 6 g niedrig siedende Produkte. Es verbleiben 170 g eines Reaktionsgemisches, das entsprechend Beispiel 1 bei 160°C mit Wasser umgesetzt wurde. Man erhält 165 g rohe Vinylphosphonsäure.

Beispiel 6

300 g 2-Acetoxyethanphosphonsäuredimethylester und 6 g Phosphorsäuretrisdimethylamid werden während 7 Stunden unter Rühren auf 200 bis 220°C erhitzt. Dabei destillieren 105 g Methylacetat über eine Kolonne ab. In einer der Apparatur nachgeschalteten Kühlfalle finden sich 8 g niedrig siedender Produkte. Es fallen 182 g eines Reaktionsgemisches an, das ensprechend Beispiel 1 bei 165°C mit Wasser umgesetzt wurde. Man erhält 163 g rohe Vinylphosphonsäure.

Beispiel 7

300 g 2-Acetoxyethanphosphonsäuredimethylester und 3 g Trimethylphosphinoxid werden 8,5 Stunden unter Rühren auf 200 bis 220°C erhitzt. Dabei destillieren 93 g Methylacetat ab. In einer der Apparatur nachgeschalteten Kühlfalle sammeln sich 7,5 g niedrig siedender Produkte. Es wird 1 Stunde bei 215°C nachgerührt. Es fallen 180 g eines Reaktionsgemisches an, das entsprechend Beispiel 1 bei 155°C mit Wasser umgesetzt wurde. Man erhält 167 g rohe Vinylphosphonsäure.

Beispiel 8

300 g 2-Acetoxyethanphosphonsäuredimethylester und 6 g Dimethylformamid werden auf 215°C unter Rühren erhitzt. In 5 Stunden und 35 Minuten destillieren über eine Kolonne 104 g Methylacetat ab. In einer der Apparatur nachgeschalteten Kühlfalle sammeln sich 7,5 g niedrig siedender Produkte. Man gewinnt 180 g eines Reaktionsgemisches, das entsprechend Beispiel 1 bei 160°C mit Wasser umgesetzt wurde. Man erhält 167 g rohe Vinylphosphonsäure.

Beispiel 9

Ein Gemisch von 100 g Vinylphosphonsäure und 150 g 2-Acetoxyethanphosphonsäuredimethylester wird auf 175°C unter Rühren erhitzt, dabei beginnt die Abdestillation von Methylacetat. Nun werden wärend 34 Stunden 3000 g 2-Acetoxyethanphosphonsäuredimethylester bei 180°C unter gleichzeitiger weiterer Abdestillation von Methylacetat eingetropft und danach das anfallende Reaktionsgemisch noch 3 Stunden auf 205°C erhitzt. Danach wird das Reaktionsgemisch bei 155-160°C mit Wasser umgesetzt, während das gebildete Methanol über eine Silbermantelkolonne abdestilliert. Man erhält 1760 g rohe Vinylphosphonsäure, die 82% Vinylphosphonsäure, 3,9% Vinylphosphonsäureester der 2-Hydroxyethanphosphonsäure der Struktur

$$CH_2{=}CH{-}\underset{OH}{\overset{O}{\overset{\|}{P}}}{-}OCH_2CH_2\overset{O}{\overset{\|}{P}}(OH)_2,$$

1,3% 2-Hydroxyethanphosphonsäure und 10% Phosphorsäure enthält, bezogen auf die Gesamtmenge der Phosphorsignale im $^{31}$P-NMR-Spektrum.

**Patentansprüche**

1. Verfahren zur Herstellung von Vinylphosphonsäure, dadurch gekennzeichnet, dass man 2-Acetoxyethanphosphonsäuredialkylester der allgemeinen Formel

$$CH_3COOCH_2CH_2\overset{O}{\overset{\|}{P}}(OR)_2,$$

worin R eine Alkylgruppe mit 1-4 Kohlenstoffatomen bedeutet, in Gegenwart saurer oder basischer Katalysatoren unter Abspaltung von Alkylacetat auf 150 bis 270°C erhitzt und das verbleibende Reaktionsgemisch anschliessend mit Wasser bei Temperaturen zwischen 130 und 230°C unter gleichzeitiger Abdestillation des gebildeten Alkohols hydrolysiert.

2. Verfahren nach Anspruch 1, dadurch gekennzeichnet, dass man die Abspaltung des Alkylacetats bei 170-230°C und die Hydrolyse bei 140-175°C vornimmt.

**Claims**

1. A process for the preparation of vinylphosphonic acid, which is characterized by heating a 2-acetoxyethanephosphonic acid dialkyl ester of the general formula

$$CH_3COOCH_2CH_2\overset{O}{\overset{\|}{P}}(OR)_2,$$

In which R denotes an alkyl group having 1 to 4 carbon atoms, in the presence of acid or basic catalysts at 150 to 270°C with elimination of an alkyl acetate and thereafter hydrolyzing the remaining reaction mixture with water at temperatures between 130 and 230°C while simultaneously distilling off the alcohol formed.

2. The process as claimed in claim 1, wherein the elimination of the alkyl acetate is carried out at 170-230°C and the hydrolysis is carried out at 140-175°C.

**Revendications**

1. Procédé de préparation de l'acide vinylphosphonique, procédé caractérisé en ce qu'on chauffe un acétoxy-2 éthane-phosphonate de dialkyle répondant à la formule générale:

$$CH_3COOCH_2CH_2\overset{O}{\overset{\|}{P}}(OR)_2,$$

dans laquelle R représente un radical alkyle contenant de 1 à 4 atomes de carbone, à une température de 150 à 270°C, en présence de catalyseurs acides ou basiques, chauffage au cours duquel il se produit un enlèvement d'acétate d'alkyle, puis on hydrolyse le mélange réactionnel restant, au moyen d'eau, à une température comprise entre 130 et 230°C, tout en chassant par distillation l'alcool qui se forme.

2. Procédé selon la revendication 1, caractérisé en ce que la réaction d'enlèvement de l'acétate d'alkyle est effectuée à une température de 170 à 230°C et l'hydrolyse à une température de 140 à 175°C.